# EUROPÄISCHE PATENTSCHRIFT

(11) **EP 0 482 450 B1**
(45) Veröffentlichungstag und Bekanntmachung des Hinweises auf die Patenterteilung: **13.09.1995**
(21) Anmeldenummer: 91117356.5
(22) Anmeldetag: 11.10.1991
(51) Int. Cl.: C04B 14/30, C04B 18/02, C09C 3/04

(54) **Verfahren zum Einfärben von Baustoffen**
Process for colouring building materials
Procédé pour la coloration de matériaux de construction

(30) Priorität: 24.10.1990 DE 4033826
(43) Veröffentlichungstag der Anmeldung: 29.04.1992
(73) Patentinhaber: BAYER AG, 51368 Leverkusen (DE)
(72) Erfinder: Rademachers, Jakob, Dr., W-4150 Krefeld (DE); Teichmann, Günther, Dr., W-4150 Krefeld 1 (DE)

(56) Entgegenhaltungen:
- EP-A- 0 396 975
- EP-A- 0 419 964
- DE-A- 1 592 919
- DE-A- 3 619 363
- US-A- 1 982 541

## Beschreibung

Die vorliegende Erfindung betrifft ein Verfahren zum Einfärben von Baustoffen mit anorganischen Pigmenten in Form von Granulaten gemäß Patent Nr. 39 18 694.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Blau- und Grünpigmente, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wässerige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden.

Die Baustoffindustrie ist deshalb größtenteils bei dem Einsatz trockener Pigmentpulver geblieben. Der Verwendung von Pigmenten in Form von Granulaten, wie es aus der Kunststoff- und Lackindustrie bekannt ist, stand bisher die Meinung entgegen, derartige Granulate seien in Betonzubereitungen weniger gut dispergierbar. Schwer dispergierbare Pigmentagglomerate erfordern wesentlich längere Mischzeiten. Bei den normalen, in der Baustoffindustrie üblichen kurzen Mischzeiten treten infolge schlechter Pigmentverteilung an der Betonoberfläche Stippen, Streifen oder Farbnester auf. Die im Pigment enthaltene Farbstärke kann sich nicht entfalten, so daß bei gleicher Farbintensität des Betonwerkstückes größere Pigmentmengen aufgewendet werden müssen.

In der DE-C 3619363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedrigmolekularen teilveresterten Styrol-Maleinsäureanhydrid-Copolymerisaten und Copolymere aus Vinylacetat und Krotonsäure. Der Anteil im Pigment soll bevorzugt 2 bis 6 Gew.-% betragen.

Die genannten Dispergierhilfsmitel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar.

Gemäß der DE-A 29 40 156 weist das anorganische Ausgangspigment einen Harzgehalt von mindestns 20 % auf. Eine Zerteilung entsprechender Granulate im Beton wird durch die Harzanteile hydrophob eingestellter Agglomerate sehr erschwert.

Die Aufgabe der vorliegenden Erfindung besteht nun darin, zum Einfärben von Baustoffen gut fließende, nicht staubende anorganische Pigmentgranulate zur Verfügung zu stellen, die die beschriebenen Nachteile des Standes der Technik nicht aufweisen.

Diese Aufgabe wurde gelöst durch ein Verfahren zum Einfärben von Baustoffen mit anorganischen Pigmenten in Form von Granulaten, wobei die Granulate durch Aufbaugranulation aus einer wäßrigen Suspension aus einem oder mehreren Pigmenten und aus Verbindungen des Bors, Aluminiums, Siliciums, Titans, Zinks und/oder Zinns erhalten wurden und eine durchschnittliche Partikelgröße zwischen 0,5 und 10 mm aufweisen.

Es hat sich nämlich überraschenderweise gezeigt, daß diese rein anorganische Zusätze enthaltenden Pigmentgranulate vergleichbare Dispergiereigenschaften in Betonzubereitungen aufweisen wie Pigmentgranulate mit in Betonzubereitungen wirkenden Verflüssigern, ohne organische Substanzen aufzuweisen.

Mit Pigmentgranulaten werden solche Granulate bezeichnet, die aus feinen Pigmentteilchen des Durchmessers von 0,05 bis 5 µm zusammengesetzt werden und selbst einen Durchmesser bis zur Größenordnung der Betonzuschlagstoffe besitzen, was in der Regel bis zu einigen mm bedeutet.

Geeignete Aggregate zur Herstellung dieser Granalien sind Granulierteller oder -trommeln Dragiertrommeln oder weitere dem Fachmann geläufige Vorrichtungen zur Aufbaugranulation.

Die durchschnittliche Partikelgröße der erfindungsgemäßen Pigmentgranulate liegt zwischen 0,5 und 10 mm, bevorzugt zwischen 0,5 und 2 mm.

Die erfindungsgemäß zugesetzten Verbindungen können bevorzugt in Form von Oxiden und/oder Hydroxiden vorliegen. Sie können aber auch aus Boraten, Aluminaten, Silikaten, Titanaten, Zinkaten und/oder Stannaten bestehen, die entweder in dieser Form oder auch als diese Verbindungen bildende Substanzen den Pigmenten zugesetzt werden. So ist es beispielsweise möglich, beim Herstellungsprozeß zersetzliche, Oxide bildende Verbindungen einzusetzen, wie es bei Titan- oder Kieselsäureestern der Fall ist.

In einer besonderen Ausführungsform des erfindungsgemäßen Verfahrens sind die zugesetzten Verbindungen Kieselsol oder Wasserglas. Hierbei handelt es sich um Substanzen, die ohnehin als Bestandteile des Betons auftauchen.

Die Menge der erfindungsgemäß zugesetzten Verbindungen kann, auf Pigment bezogen, 0,05 bis 5,0 Gew.-%, vorzugsweise 0,1 bis 1 Gew.-%, als Oxid gerechnet, betragen.

Kleinere Mengen zeigen keine Wirksamkeit, größere Mengen können zu Dispergierschwierigkeiten führen. Die Verbindungen können in Form ihrer Lösungen, als Kolloide oder auch als Suspensionen im gesamten Herstellungsprozeß der Granulate, auch bereits bei der eigentlichen Pigmentbildung zugesetzt werden.

Die Partikelgröße sollte nicht zu niedrig gewählt werden, da die feinen Anteile unter etwa 50 µm - abhängig von den Pigmenteigenschaften - für das Stauben eines trockenen Pulvers verantwortlich sind. Zudem wird mit Zunahme dieses Anteils die Riesel- oder Fließfähigkeit verschlechtert.

Die Pigmentgranulate stellen handhabungsstabile, nicht staubende, gut rieselfähige Pulver dar, die im Verein mit den erfindungsgemäßen Zusätzen für die Einfärbung von Baustoffen gut geeignet sind. Im Gegensatz zur bisherigen Meinung (DE-C 36 19363) reichen die Scherkräfte in Betonzubereitungen für die vollständige Pigmentdispergierung der Granulate während des Mischzyklus aus.

Als in den erfindungsgemäßen Granulaten enthaltene anorganische Pigmente werden bevorzugt Eisen-, Chrom-, Mangan- und/oder Titanoxide eingesetzt.

Besonders gute Ergebnisse werden mit Eisenoxid-Pigmenten erzielt.

Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 0,8 und 1,0 g/cm³, Eisenoxidrotpigmentgranulate zwischen 1,2 und 1,4 g/cm³, auf.

Die erfindungsgemäßen Granulate enthalten normalerweise um 1 Gew.-% Wasser. Je nach Pigmentfeinheit und Teilchenform kann der Wassergehalt höher liegen, ohne daß die Rieselfähigkeit negativ beeinflußt wird. So können Eisenoxidrotpigmentgranulate mit einem Zusatz an 0,15 Gew.-% SiO₂ in Form von Natriumsilikat ohne Nachteile 6 Gew.-% Wasser enthalten. Der Wassergehalt sollte 10 Gew.-% nicht überschreiten.

Das Verfahren der Erfindung soll an folgenden Beispielen näher erläutert werden; es ist darin jedoch keine Einschränkung auf die Beispiele zu sehen.

Die Prüfung der Dispergierbarkeit in Beton erfolgte über die Farbstärkemessung an mit Weißzement hergestellten Prismen bei folgenden Daten: Zement-Quarzsand-Verhältnis 1 : 4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 30, 40, 50, 60, 70 und 80 s wurden 4 Mischungsproben (300 g) entnommen und Probekörper (5 x 10 x 2,5 cm) unter Druck (32,5 N/mm²) hergestellt. Härtung der Probekörper: 24 Std. bei 30° C und 95 % rel. Luftfeuchte mit anschließendem Trocknen 24 Stunden bei 50° C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der Probe mit 80 s Mischzeit (Endfarbstärke = 100 %) gesetzt.

Zur weiteren Prüfung der Dispergierbarkeit wurden Mischungen in einem größeren, 80 kg fassenden "Zyklos"-Mischer durchgeführt. Hierbei wurde zuerst Sand und Zement trocken vorgemischt (30 Sekunden) und erst nach Wasserzugabe und weiterem Mischen (ebenfalls 30 Sekunden) das Pigmentgranulat zugesetzt. Die hierbei erhaltenen Resultate, gemessen an Betondachsteinen, entsprechen im Dispergierverhalten den Ergebnissen aus dem kleinen Labormischer.

### Beispiel 1:

Auf einem Granulierteller mit

| | |
|---|---|
| Durchmesser: | 700 mm |
| Aufkantung: | 120 mm |
| Tellerneigung: | 60° |
| Schaberstellung: | 10³⁰ Uhr |
| Drehzahl: | 30 Upm |

wurde 25 kg/h Eisenoxidgelb Bayferrox® 920, ein Handelsprodukt der Bayer AG, kontinuierlich aufgegeben und gleichzeitig 1 Gew.% Natronwasserglaslösung mit 360 g/l SiO₂ aufgedüst. Man erhält kontinuierlich gelbe Granalien.

| | | | | | |
|---|---|---|---|---|---|
| Siebanalyse: | >3 mm | 3-2 mm | 2-1 mm | 1-0,5 mm | <0,5 mm |
| | 4,4% | 13,0% | 66,6% | 12,9% | 15,1% |

In der Prüfung des Dispergierverhaltens wurde die Endfarbstärke nach einer Mischzeit von 60 Sekunden erreicht.

### Beispiel 2:

Es wurde wie im Beispiel 1 verfahren, wobei jedoch Eisenoxidrot Bayferrox® 130, Handelsprodukt der Bayer AG, mit 1% Wasser als Granulierhilfsmittel bei einer Aufgabemenge von 4 kg/h versetzt wurde.

| | | | | | |
|---|---|---|---|---|---|
| Siebanalyse: | > 3mm | 3-2 mm | 2-1 mm | 1-0,5 mm | >0,5 mm |
| | 1,8% | 28,5% | 18,0% | 15,8% | 35,9% |

Die Endfarbstärke wurde nach einer Mischzeit von 70 Sekunden erreicht.

## Patentansprüche

1. Verfahren zum Einfärben von Baustoffen mit anorganischen Pigmenten in Form von Granulaten, dadurch gekennzeichnet, daß die Granulate durch Aufbaugranulation aus einer wäßrigen Suspension aus einem oder mehreren Pigmenten und aus Verbindungen des Bors, Aluminiums, Siliciums, Titans, Zinks und/oder Zinns erhalten wurden und eine durchschnittliche Partikelgröße zwischen 0,5 und 10 mm aufweisen.

2. Verfahren gemäß Anspruch 1, dadurch gekennzeichnet, daß die in den Granulaten enthaltenen Verbindungen in Form von Oxiden und/oder Hydroxiden vorliegen.

3. Verfahren gemäß Anspruch 1, dadurch gekennzeichnet, daß die in den Granulaten enthaltenen Verbindungen Borate, Aluminate, Silikate, Titanate, Zinkate oder Stannate sind.

4. Verfahren gemäß einem oder mehreren der Ansprüche 1 bis 3, dadurch gekennzeichnet, daß die in den Granulaten enthaltene Verbindung Wasserglas ist.

5. Verfahren gemäß einem oder mehreren der Ansprüche 1 bis 3, dadurch gekennzeichnet, daß die in den Granulaten enthaltene Verbindung Kieselsol ist.

6. Verfahren gemäß einem oder mehreren der Ansprüche 1 bis 5, dadurch gekennzeichnet, daß die in den Granulaten enthaltenen Verbindungen, auf Pigment bezogen, 0,05 bis 5 Gew.-%, vorzugsweise 0,1 bis 1 Gew.-%, gerechnet als Oxide, betragen.

7. Verfahren gemäß einem oder mehreren der Ansprüche 1 bis 6, dadurch gekennzeichnet, daß die durchschnittliche Partikelgröße der Pigmentgranulate zwischen 0,5 und 2 mm liegt.

8. Verfahren gemäß einem oder mehreren der Ansprüche 1 bis 7, dadurch gekennzeichnet, daß die in den Granulaten enthaltenen anorganischen Pigmente bevorzugt Eisen-, Chrom-, Mangan- und/oder Titanoxide sind.

9. Verfahren gemäß Anspruch 8, dadurch gekennzeichnet, daß die anorganischen Pigmente Eisenoxidpigmente sind.

10. Verfahren gemäß einem oder mehreren der Ansprüche 1 bis 9, dadurch gekennzeichnet, daß die eingesetzten Granulate einen Wassergehalt von 0,1 bis 10 Gew.-%, vorzugsweise 0,2 bis 2 Gew.-%, aufweisen.

11. Verfahren gemäß einem oder mehreren der Ansprüche 1 bis 10, dadurch gekennzeichnet, daß die eingesetzten Granulate ein Stampfgewicht zwischen 0,5 und 2,5 g/ml, vorzugsweise 0,8 und 1,5 g/ml, aufweisen.

## Claims

1. A process for colouring building materials with inorganic pigments in the form of granules, characterized in that the granules have been obtained by pan granulation from an aqueous suspension of one or more pigments and compounds of boron, aluminium, silicon, titanium, zinc and/or tin and have an average particle size of 0.5 to 10 mm.

2. A process as claimed in claim 1, characterized in that the compounds present in the granules are present in the form of oxides and/or hydroxides.

3. A process as claimed in claim 1, characterized in that the compounds present in the granules are borates, aluminates, silicates, titanates, zincates or stannates.

4. A process as claimed in one or more of claims 1 to 3, characterized in that the compound present in the granules is waterglass.

5. A process as claimed in one or more of claims 1 to 3, characterized in that the compound present in the granules is silica sol.

6. A process as claimed in one or more of claims 1 to 5, characterized in that the compounds present in the granules (expressed as oxides) make up 0.05 to 5% by weight and preferably 0.1 to 1% by weight, based on pigment.

7. A process as claimed in one or more of claims 1 to 6, characterized in that the average particle size of the pigment granules is between 0.5 and 2 mm.

8. A process as claimed in claims 1 to 7, characterized in that the inorganic pigments present in the granules are preferably iron, chromium, manganese and/or titanium oxides.

9. A process as claimed in claim 8, characterized in that the inorganic pigments are iron oxide pigments.

10. A process as claimed in one or more of claims 1 to 9, characterized in that the granules used have a water content of 0.1 to 10% by weight and preferably 0.2 to 2% by weight.

11. A process as claimed in one or more of claims 1 to 10, characterized in that the granules used have a compacted bulk weight of 0.5 to 2.5 g/ml and preferably 0.8 to 1.5 g/ml.

## Revendications

1. Procédé pour colorer des matériaux de construction à l'aide de pigments minéraux à l'état de granulés, caractérisé en ce que les granulés ont été obtenus par granulation par accumulation à partir d'une suspension aqueuse d'un ou plusieurs pigments et de composés du bore, de l'aluminium, du silicium, du titane, du zinc et/ou de l'étain et ont une dimension de particule moyenne de 0,5 à 10 mm.

2. Procédé selon la revendication 1, caractérisé en ce que les composés contenus dans les granulés sont à l'état d'oxydes et/ou d'hydroxydes.

3. Procédé selon la revendication 1, caractérisé en ce que les composés contenus dans les granulés sont des borates, des aluminates, des silicates, des titanates, des zincates ou des stannates.

4. Procédé selon une ou plusieurs des revendications 1 à 3, caractérisé en ce que le composé contenu dans les granulés est du silicate de sodium.

5. Procédé selon une ou plusieurs des revendications 1 à 3, caractérisé en ce que le composé contenu dans les granulés est du sol de silice.

6. Procédé selon une ou plusieurs des revendications 1 à 5, caractérisé en ce que les composés contenus dans les granulés représentent de 0,05 à 5 %, de préférence de 0,1 à 1 % du poids du pigment et exprimé en oxyde.

7. Procédé selon une ou plusieurs des revendications 1 à 6, caractérisé en ce que la dimension de particule moyenne des granulés de pigments est de 0,5 à 2 mm.

8. Procédé selon une ou plusieurs des revendications 1 à 7, caractérisé en ce que les pigments minéraux contenus dans les granulés consistent de préférence en oxydes du fer, du chrome, du manganèse et/ou du titane.

9. Procédé selon la revendication 8, caractérisé en ce que les pigments minéraux sont des pigments d'oxydes de fer.

10. Procédé selon une ou plusieurs des revendications 1 à 9, caractérisé en ce que les granulés utilisés ont une teneur en humidité de 0,1 à 10 %, de préférence de 0,2 à 2 % en poids.

11. Procédé selon une ou plusieurs des revendications 1 à 10, caractérisé en ce que les granulés utilisés ont une densité à l'état tassé de 0,5 à 2,5 g/ml, de préférence de 0,8 à 1,5 g/ml.
